# EUROPEAN PATENT APPLICATION

(11) **EP 3 696 525 A1**
(43) Date of publication of application: **19.08.2020**
(21) Application number: 19397505.9
(22) Date of filing: 13.02.2019
(51) Int. Cl.: G01K 13/02, G01K 1/14, G01F 1/684, A62C 35/60, A62C 35/68, A62C 37/50

(54) **CLAMP WITH FLOW DETECTION CAPABILITIES FOR FIRE SUPPRESSION APPLICATIONS**

(71) Applicant: Marioff Corporation OY, 01510 Vantaa (FI)
(72) Inventor: KRUTSKEVYCH, Nazar, 80-771 POMORSKE (PL); WISNIEWSKI, Karol, 80-771 POMORSKE (PL)
(74) Representative: Papula Oy

(57) **Abstract**

Disclosed is a pipe clamp including a controller configured for: monitoring a first sensor integrated into the clamp, the first sensor sensing a first temperature, the first temperature being a temperature of a pipe that is clamped therein; controlling a heating system integrated into the clamp to heat the pipe, thereby heating stationary fluid within the pipe that is proximate the clamp; determining a first temperature differential defined by a difference between the first temperature and a reference temperature; and determining that a flow exists in through pipe when the first temperature differential changes by an amount that is greater than a predetermined threshold.

## Description

### BACKGROUND

The embodiments herein relate to sprinkler systems and more specifically to a clamp with flow detection capabilities for fire suppression applications.

Fire sprinkler systems may include water flow detectors which may be able to provide some information about the activation of sprinkler heads within the system. The water flow detectors that are used throughout the industry maybe devices which located within the pipe.

### BRIEF SUMMARY

Disclosed is a pipe clamp comprising a controller configured for: monitoring a first sensor integrated into the clamp, the first sensor sensing a first temperature, the first temperature being a temperature of a pipe that is clamped therein; controlling a heating system integrated into the clamp to heat the pipe, thereby heating stationary fluid within the pipe that is proximate the clamp; determining a first temperature differential defined by a difference between the first temperature and a reference temperature; and determining that a flow exists in through pipe when the first temperature differential changes by an amount that is greater than a predetermined threshold.

In addition to one or more of the above disclosed features or as an alternate the controller is configured for communicating with a fire system controller upon determining that a flow exists through the pipe.

In addition to one or more of the above disclosed features or as an alternate the controller is configured for monitoring a second sensor integrated into clamp, the second sensor sensing a second temperature, the second temperature being an environmental temperature for an environment around the clamp.

In addition to one or more of the above disclosed features or as an alternate the controller is configured for controlling the heating system so that the first differential is within a predetermined range.

In addition to one or more of the above disclosed features or as an alternate the controller is configured for controlling an adjustable current source unit of the heating system to adjust current applied to a heating element of the heating system, thereby controlling the first temperature.

In addition to one or more of the above disclosed features or as an alternate the heating element is a conductive or semi-conductive material.

In addition to one or more of the above disclosed features or as an alternate the controller is configured for communicating with a powerline communication unit (PCU) of the heating system to control the adjustable current source unit, thereby controlling the first temperature.

In addition to one or more of the above disclosed features or as an alternate based on the first temperature sensed by the first sensor, the controller is configured for communicating with the PCU to control the adjustable current source unit to increase or decrease current applied to the heating element, thereby dynamically maintaining the first temperature differential in the first predetermined range.

In addition to one or more of the above disclosed features or as an alternate the clamp is a block clamp having a first portion that is one of a top portion and a bottom portion and a second portion that is another of the top portion and the bottom portion, wherein the first portion and second portion each include a semi-circular cutout for clamping the pipe therein, and wherein the first portion includes the heating system and a plurality of sensors, the plurality of sensors including the first sensor and the second sensor.

### BRIEF DESCRIPTION OF THE DRAWINGS

The present disclosure is illustrated by way of example and not limited in the accompanying figures in which like reference numerals indicate similar elements.
FIG. 1 illustrates a clamp for a sprinkler system according to an embodiment;
FIG. 2 illustrates a partial sectional view of a clamp for a sprinkler system according to an embodiment;
FIG. 3 illustrates a clamp for a sprinkler system installed on a support according to an embodiment;
FIG. 4 schematically illustrates electronic components of a clamp for a sprinkler system according to an embodiment;
FIG. 5 illustrates a method of controlling a clamp according to an embodiment; and
FIG. 6 illustrates a sprinkler system including a clamp according to an embodiment.

### DETAILED DESCRIPTION

The following figures illustrate technical features associated with one or more disclosed embodiments. Further, process steps disclosed hereinafter may be sequentially numbered to facilitate discussion of one or more disclosed embodiments. Such numbering is not intended to identify a specific sequence of performing such steps or a specific requirement to perform such steps unless expressly indicated.

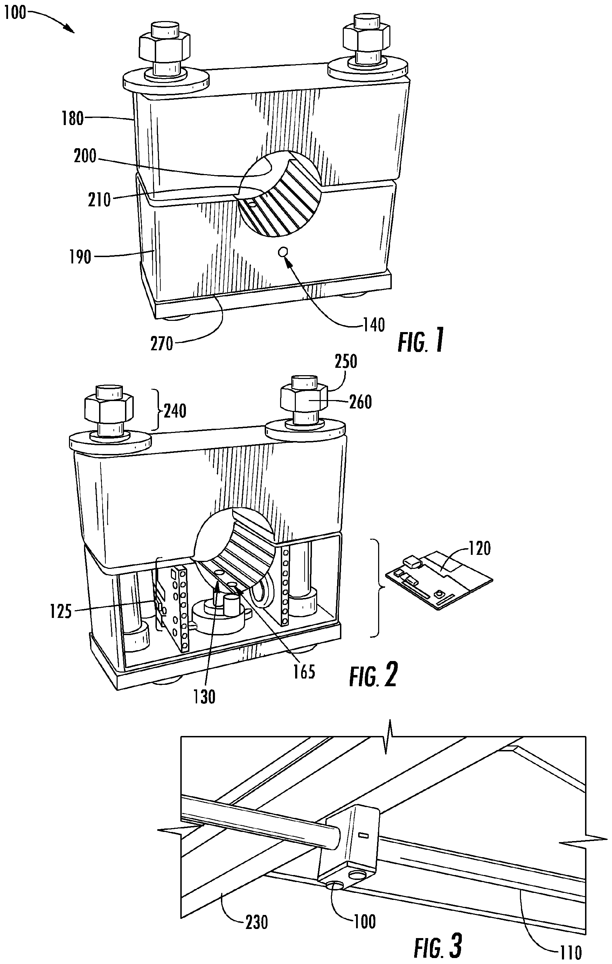

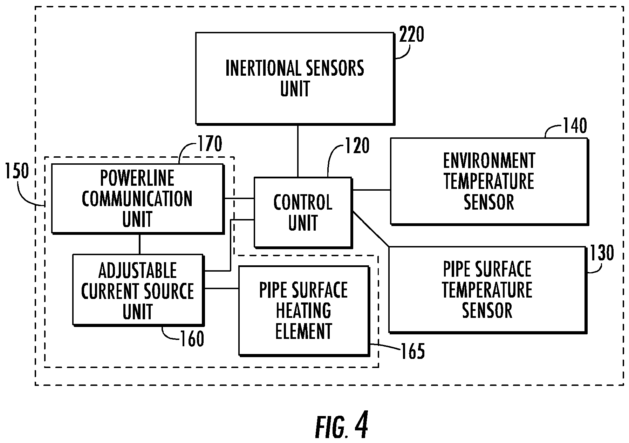

Turning to FIGS. 1-3 a pipe clamp 100, for example secured to a sprinkler pipe 110, is disclosed according to an embodiment. The clamp 100 may include a controller 120, illustrated in FIG. 2 and schematically in FIG. 4. The clamp 100 may further include a plurality of sensors 125 that communicate with the controller 120, including a first sensor 130 and a second sensor 140, which may be a plurality of temperature sensors respectively sensing temperatures of the pipe 110 and the environment around the pipe 110, as further discussed below. The clamp 100 may further include a heating system 150 controlled by the controller 120, as further discussed below. The heating system 150 may include an adjustable current source unit 160, a pipe surface heating element 165 and a powerline communication unit 170.

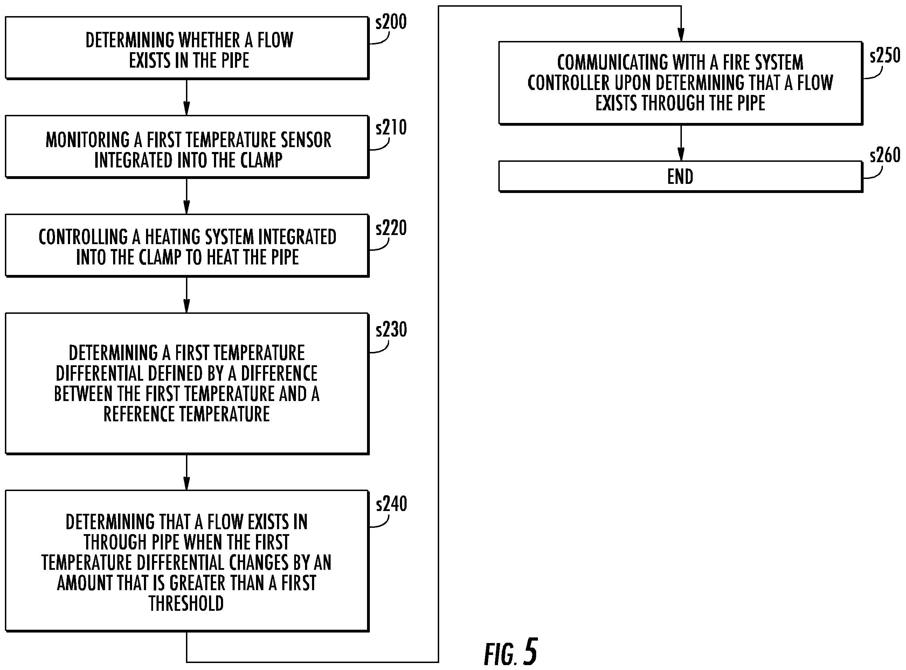

As illustrated in FIG. 5, the controller 120 may be configured for effecting a process S200 of determining whether a flow exists in the pipe 110. At step S210 the controller 120 may be configured for monitoring the first sensor 130 integrated into the clamp 100. As indicated the first sensor 130 may sense a first temperature and more specifically the first temperature may be a temperature of the pipe 110. At step S220, the controller 120 may be configured for controlling the heating system 150 integrated into the clamp 100 to heat the pipe 110. This may result in heating stationary fluid within the pipe 110 that is proximate the clamp 100. At step S230 the controller 120 may be configured for determining a first temperature differential defined by a difference between the first temperature and a reference temperature.

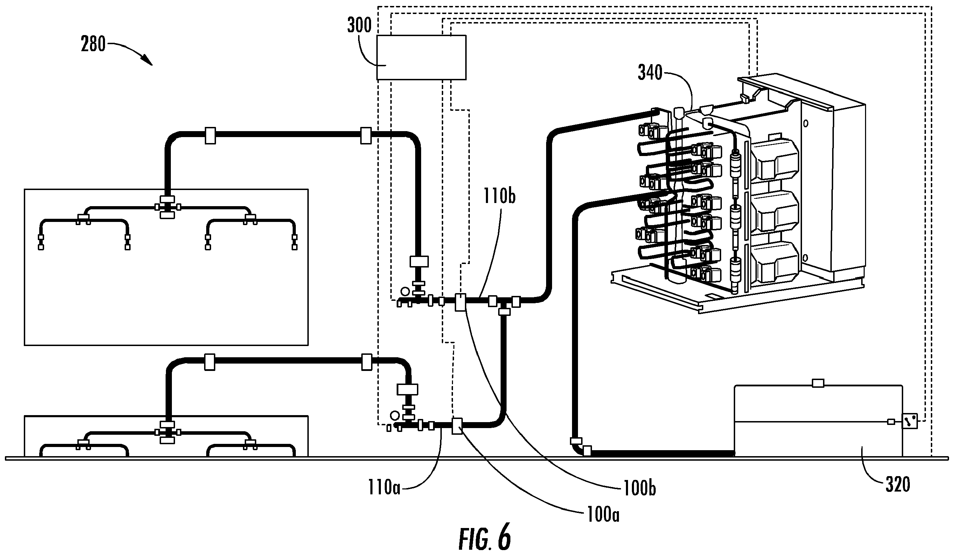

At step S240 the controller 120 may be configured for determining that a flow exists in through pipe 110 when the first temperature differential changes by an amount that is greater than a predetermined threshold. For example, a cool flow of sprinkler fluid may remove heat introduced into the pipe 110 by the heating system 150, and result in a decrease in the first temperature differential that triggers a determination of a flow in the pipe 110. Such flow may occur, for example, if a frangible bulb bursts in a sprinkler head due to an existence of a fire condition. Thus, by determining there is a flow in the pipe 110, the controller 120 may determine there is an active fire condition. As illustrated in FIG. 6, at step S250, the controller 120 may be configured for communicating with a fire system controller 300 upon determining that a flow exists through the pipe 110. At completion of the process defined began with step S200, the controller 120 may end further related processing at step S260.

In one or more embodiments, when executing step S230, the controller 120 may be configured for monitoring the second sensor 140 integrated into clamp 100. The second sensor 140, as indicated, may sense a second temperature, wherein the second temperature may be an environmental temperature for an environment around the clamp 100. For example, the environment may be at standard atmospheric conditions within a building.

In one or more embodiments, when executing step S220, the controller 120 may be configured for controlling the heating system 150 so that the first differential is within a predetermined range, such as a few degrees. In one or more embodiments, the controller 120 may be configured for controlling the adjustable current source unit 160 of the heating system 150. Adjusting the current source unit 160 may result in adjusting current applied to the heating element 165 of the heating system 150. This may result in controlling the first temperature. In one or more embodiments, the heating element 165 may be an element made from conductive or semi conductive materials.

In one or more embodiments, the controller 120 may be configured for communicating with the powerline communication unit (PCU) 170 of the heating system 150. With such communications, the controller 120 may control the adjustable current source unit 160. Thus, by communicating with the PCU 170, the controller 120 may control the first temperature. In one or more embodiments, based on the first temperature sensed by the first sensor 130, the controller 120 may be configured for communicating with the PCU 170 to control the adjustable current source unit 160 to increase or decrease current applied to the heating element 165. With this configuration the controller 120 may dynamically maintain the first temperature differential in the first predetermined range. Thus, if a room temperature raises or lowers dramatically in an environment that is not subject to air conditioning, the system may be prevented from generating false indications of flow in the pipe 110.

As further illustrated in FIG. 1, in one or more embodiments, the clamp 100 is a block clamp having a first portion 180 that is one of a top portion and a bottom portion and a second portion 190 that is another of the top portion and the bottom portion. The first portion 180 and the second portion 190 may each include a respective semi-circular cutout 200, 210 for clamping the pipe 110 therein. In one embodiment the first portion 190 includes the heating system 150 and the plurality of sensors 125, which may be configured as an internal unit of sensors. As indicated, the plurality of sensors 125 may include the first sensor 130 and the second sensor 140.

In one or more embodiments, the clamp 100 may be mountable to an external support 230 for supporting the clamp 100. From this configuration the clamp 100 may support the pipe 110 clamped therein. The clamp 100 may include fasteners 240 to hold the first and second portions 180, 190, in place and for mounting to the support 230. The fasteners 240 may be one or more nuts 250, bolts 260 and support plates 270.

As illustrated in FIG. 6, a system 280 may include a plurality of the clamps 100a, 100b of the same type as clamp 100 connected to various locations on one or more pipes 110a, 110b of the same type as pipe 110. Each of the clamps 100a, 100b may communicate with the fire system controller 300 as indicated above upon determining that, at the respective clamp locations, a flow exists within the pipes 110a, 110b. Flow within the system 280 may be supported by a reservoir 320 containing fire suppressant, which may be water, which may be pumped through the system 280 by one or more pumps 340 controlled by the system controller 300.

As described above, electronic components of the disclosed embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A pipe clamp comprising a controller configured for:
monitoring a first sensor integrated into the clamp, the first sensor sensing a first temperature, the first temperature being a temperature of a pipe that is clamped therein;
controlling a heating system integrated into the clamp to heat the pipe, thereby heating stationary fluid within the pipe that is proximate the clamp;
determining a first temperature differential defined by a difference between the first temperature and a reference temperature; and
determining that a flow exists in through pipe when the first temperature differential changes by an amount that is greater than a predetermined threshold.

2. The clamp of claim 1 wherein the controller is configured for communicating with a fire system controller upon determining that a flow exists through the pipe.

3. The clamp of claim 2 wherein the controller is configured for monitoring a second sensor integrated into clamp, the second sensor sensing a second temperature, the second temperature being an environmental temperature for an environment around the clamp.

4. The clamp of claim 3 wherein the controller is configured for controlling the heating system so that the first differential is within a predetermined range.

5. The clamp of claim 4 wherein the controller is configured for controlling an adjustable current source unit of the heating system to adjust current applied to a heating element of the heating system, thereby controlling the first temperature.

6. The clamp of claim 5 wherein the heating element is a conductive or semi-conductive material.

7. The clamp of claim 6 wherein the controller is configured for communicating with a powerline communication unit (PCU) of the heating system to control the adjustable current source unit, thereby controlling the first temperature.

8. The clamp of claim 7 wherein based on the first temperature sensed by the first sensor, the controller is configured for communicating with the PCU to control the adjustable current source unit to increase or decrease current applied to the heating element, thereby dynamically maintaining the first temperature differential in the first predetermined range.

9. The clamp of claim 8 wherein the clamp is a block clamp having a first portion that is one of a top portion and a bottom portion and a second portion that is another of the top portion and the bottom portion, wherein the first portion and second portion each include a semi-circular cutout for clamping the pipe therein, and wherein the first portion includes the heating system and a plurality of sensors, the plurality of sensors including the first sensor and the second sensor.

10. The clamp of claim 9 wherein the clamp is mountable to an external support for supporting the clamp and thereby supporting the pipe clamped therein.

11. A method of monitoring flow conditions in a pipe clamp with a controller, the method comprising:
monitoring a first sensor integrated into the clamp, the first sensor sensing a first temperature, the first temperature being a temperature of a pipe that is clamped therein;
controlling a heating system integrated into the clamp to heat the pipe, thereby heating stationary fluid within the pipe that is proximate the clamp;
determining a first temperature differential defined by a difference between the first temperature and a reference temperature; and
determining that a flow exists in through pipe when the first temperature differential changes by an amount that is greater than a predetermined threshold.

12. The method of claim 11 wherein the controller is configured for communicating with a fire system controller upon determining that a flow exists through the pipe.

13. The method of claim 12 wherein the controller is configured for monitoring a second sensor integrated into clamp, the second sensor sensing a second temperature, the second temperature being an environmental temperature for an environment around the clamp.

14. The method of claim 13 wherein the controller is configured for controlling the heating system so that the first differential is within a predetermined range.

15. The method of claim 14 wherein the controller is configured for controlling an adjustable current source unit of the heating system to adjust current applied to a heating element of the heating system, thereby controlling the first temperature.

16. The method of claim 15 wherein the heating element is a conductive or semi-conductive material.

17. The method of claim 16 wherein the controller is configured for communicating with a powerline communication unit (PCU) of the heating system to control the adjustable current source unit, thereby controlling the first temperature.

18. The method of claim 17 wherein based on the first temperature sensed by the first sensor, the controller is configured for communicating with the PCU to control the adjustable current source unit to increase or decrease current applied to the heating element, thereby dynamically maintaining the first temperature differential in the first predetermined range.

19. The method of claim 18 wherein the clamp is a block clamp having a first portion that is one of a top portion and a bottom portion and a second portion that is another of the top portion and the bottom portion, wherein the first portion and second portion each include a semi-circular cutout for clamping the pipe therein, and wherein the first portion includes the heating system and a plurality of sensors, the plurality of sensors including the first sensor and the second sensor.

20. The method of claim 19 wherein the clamp is mountable to an external support for supporting the clamp and thereby supporting the pipe clamped therein.
